# EUROPÄISCHE PATENTSCHRIFT

(11) **EP 4 722 636 B1**
(45) Veröffentlichungstag und Bekanntmachung des Hinweises auf die Patenterteilung: **05.08.2026**
(21) Anmeldenummer: 24204185.3
(22) Anmeldetag: 02.10.2024
(51) Int. Cl.: G01B 5/008, G01B 11/00, G01B 21/04

(54) **KOORDINATENMESSGERÄT MIT EINER PINOLE ODER EINER MESSSYSTEMWECHSELSCHNITTSTELLE UND VERFAHREN ZUR ANORDNUNG EINES SENSORS AN EINER PINOLE ODER AN EINER REPRODUZIERBAREN MESSSYSTEMWECHSELSCHNITTSTELLE**
COORDINATE MEASURING DEVICE HAVING A PINOLE OR A MEASUREMENT SYSTEM CHANGE INTERFACE AND METHOD FOR ARRANGING A SENSOR ON A PINOLE OR ON A REPRODUCIBLE MEASUREMENT SYSTEM CHANGE INTERFACE
APPAREIL DE MESURE DE COORDONNÉES AVEC UNE BROCHE OU UNE INTERFACE DE CHANGEMENT DE SYSTÈME DE MESURE ET PROCÉDÉ DE DISPOSITION D'UN CAPTEUR SUR UNE BROCHE OU SUR UNE INTERFACE DE CHANGEMENT DE SYSTÈME REPRODUCTIBLE

(43) Veröffentlichungstag der Anmeldung: 08.04.2026
(73) Patentinhaber: Hexagon Metrology GmbH, 35578 Wetzlar (DE)
(72) Erfinder: Konrad, Armin, 35625 Hüttenberg (DE)
(74) Vertreter: Knefel, Cordula

(56) Entgegenhaltungen:
- EP-B1- 2 795 243
- DE-A1- 102021 132 660
- DE-B3- 102014 118 215

## Beschreibung

Die Erfindung betrifft ein Koordinatenmessgerät mit einer Pinole oder einer Messsystemwechselschnittstelle und einem an der Pinole oder an der Messsystemwechselschnittstelle angeordneten Sensor und mit einer Lagervorrichtung, welche wenigstens ein an der Pinole oder an der Messsystemwechselschnittstelle angeordnetes Lager und wenigstens ein an dem Sensor angeordnetes Gegenlager aufweist, und mit einer an der Pinole oder an der Messsystemwechselschnittstelle angeordneten Haltevorrichtung für den Sensor, und mit wenigstens einem Versorgungsanschluss, der zwischen der Pinole oder der Messsystemwechselschnittstelle und dem Sensor ausgebildet ist, wobei der wenigstens eine Versorgungsanschluss einen Stecker und eine Kupplung aufweist. Darüber hinaus betrifft die Erfindung ein Verfahren zur Anordnung eines Sensors an einer Pinole oder an einer reproduzierbaren Messsystemwechselschnittstelle eines Koordinatenmessgerätes, bei dem der Sensor mit Gegenlagern an Lagern der Pinole angeordnet wird und wenigstens eine Haltekraft für den Sensor erzeugt wird und bei dem ein Kontakt zwischen einem Stecker und einer Kupplung wenigstens eines Versorgungsanschlusses hergestellt wird.

Aus der Praxis ist bekannt, zum dimensionellen Messen von Werkstücken mit Koordinatenmessgeräten tastende oder messende taktile und nichttaktile Sensoren zu verwenden, die fest oder lösbar fest an einem Koordinatenmessgerät angeordnet sind.

Die aus der Praxis bekannten Koordinatenmessgeräte bestehen aus mehreren beweglichen Achsen, die es ermöglichen, den Sensor im Raum so zu bewegen, dass Werkstücke dimensionell vermessen werden können.

Unter den Begriff Sensoren fallen Messköpfe, Dreh-/ Schwenkgelenke, optische Sensoren oder dergleichen.

Taktile Tastköpfe bestehen aus einem festen Teil, der mit einer Achse des Koordinatenmessgerätes, in der Regel mit einer Pinole fest oder lösbar fest verbunden ist, sowie aus einem gegenüber dem festen Teil beweglichen Teil, der einen sogenannten Taststift trägt, der aus einem länglichen Schaft besteht und an dessen einem Ende ein Tastelement, wie zum Beispiel eine Kugel, die sogenannte Antastkugel, befestigt ist. Andere Antastelemente sind zum Beispiel Spitzen oder Kugelscheiben. Mit dem anderen Ende ist der Taststift an dem beweglichen Teil des Tastkopfes befestigt, der sich gegenüber dem festen Teil verschiebt, wenn das Antastelement mit der Oberfläche eines Werkstückes in Kontakt kommt. Überschreitet die Auslenkung des Taststiftes einen vorgegebenen Wert, wird eine Antastung an dem Werkstück detektiert.

Bei den sogenannten messenden Tastköpfen ist ebenfalls ein fester Teil, der mit einer Achse des Koordinatenmessgerätes, in der Regel mit einer Pinole fest oder lösbar fest verbunden ist, und ein gegenüber dem festen Teil beweglicher Teil vorgesehen. Mit Hilfe geeigneter Messmittel wird die Auslenkung des beweglichen Teils in Relation zu dem festen Teil kontinuierlich gemessen. Bei den sogenannten schaltenden Tastköpfen wird eine Auslenkung lediglich mittels eines elektrischen Schaltimpulses angezeigt. Auf den beweglichen Teil des Tastkopfes wirken Rückstellkräfte, damit der Tastkopf sich in einer definierten Lage gegenüber dem festen Teil des Tastkopfes befindet, wenn keine äußeren Kräfte auf den Taststift wirken.

Darüber hinaus gehören zum Stand der Technik (DE 10 2004 010 083 B4) Koordinatenmessgeräte, bei denen die Tastköpfe Schaukeln aufweisen, die über Feder-Parallelogramm-Bleche miteinander verbunden sind.

Um möglichst viele unterschiedliche Messaufgaben erfüllen zu können, besitzen taktile oder messende Tastköpfe eine mechanische Schnittstelle, in die verschiedene Taststiftkonfigurationen eingesetzt oder automatisch eingewechselt werden können.

Zum Stand der Technik (DE 10 2007 054 915 A1) gehören darüber hinaus optische Sensoren, mit denen ein berührungsloses optisches Messverfahren durchgeführt werden kann.

Um komplexe Messobjekte, wie zum Beispiel Motorblöcke mit einem Koordinatenmessgerät vermessen zu können, ist nicht nur ein häufiger Wechsel der Taststiftkonfiguration erforderlich, sondern auch ein relativ häufiger Wechsel des Sensors, das heißt des Messkopfes oder des Dreh-/Schwenkgelenkes oder des optischen Sensors. Der Sensor ist üblicherweise an einer Pinole des Koordinatenmessgerätes angeordnet. In sogenannten Messkopf- oder Sensorhalterungen können verschiedene Messköpfe oder Sensoren oder Dreh-/Schwenkgelenke für verschiedene Messaufgaben gelagert sein. Diese Messköpfe oder Sensoren oder Dreh-/Schwenkgelenke werden häufig vollautomatisch von dem Koordinatenmessgerät eingewechselt, je nachdem, welche Messaufgabe die Einwechselung eines bestimmten Messkopfes oder optischen Sensors oder Dreh-/Schwenkgelenkes erforderlich macht. Es kann auch ein manueller Wechsel durchgeführt werden.

Die aus der Praxis bekannten Koordinatenmessgeräte, insbesondere die Koordinatenmessgeräte, die in Portalbauweise aufgebaut sind, weisen eine Pinole auf, an der der Sensor auswechselbar und mit einer reproduzierbaren Lagerung angeordnet ist.

Aus der Praxis sind auch Ausführungsformen bekannt, bei denen an der Pinole eine sogenannte Messsystemwechselschnittstelle, auch Interface genannt, angeordnet ist. An der Messsystemwechselschnittstelle wird der Sensor, das heißt beispielsweise das Dreh-/Schwenkgelenk oder der Messkopf oder der optische Sensor auswechselbar angeordnet.

Bei der Anordnung des Sensors an der Pinole oder an der Messystemwechselschnittstelle wird zum einen ein mechanischer Kontakt hergestellt, der durch eine reproduzierbare Lagerung ausgebildet wird sowie durch eine Haltevorrichtung, beispielsweise einen Haken. Zum anderen werden Versorgungsanschlüsse kontaktiert. Ein Sensor wird zum Beispiel mit elektrischer Energie beaufschlagt oder der Sensor ist über eine Datenleitung mit der Messsystemwechselschnittstelle oder der Pinole verbunden. Auch hydraulische Anschlüsse oder pneumatische Anschlüsse können vorgesehen sein. Darüber hinaus weisen optische Sensoren optische Anschlüsse auf, die mit Kontakt oder kontaktlos ausgebildet sein können.

Aus der Praxis ist bekannt, dass die Kontakte der Versorgungsanschlüsse während des Klemmvorganges des Sensors an der Pinole oder an der Messsystemwechselschnittstelle hergestellt werden. Hierzu wird der Sensor, wie aus der Praxis bekannt, in einer sogenannten Dreipunktlagerung an der Pinole oder an der Messsystemwechselschnittstelle angeordnet. Es erfolgt eine Klemmung beispielsweise über einen Haken. Gleichzeitig greift ein Stecker an dem Sensor in eine Kupplung an der Pinole oder an der Messsystemwechselschnittstelle. Stecker und Kupplung können auch vertauscht sein.

Greifen Stecker und Kupplung bei dieser Klemmung des Sensors nicht ordnungsgemäß ineinander, kann dies negative Auswirkungen auf die Dreipunktlagerung haben. Es besteht jedoch auch die Möglichkeit, dass Stecker und Kupplung durch ein nicht ordnungsgemäßes Zusammenführen beschädigt werden. Beispielsweise können Pins einer elektrischen oder elektronischen Steckerverbindung verbogen werden.

Ein derartiges System ist aus der EP 2 795 243 B1 bekannt. Gemäß diesem Stand der Technik wird eine elektrische Schnittstelle durch Einführen eines Steckers in eine Buchse offenbart. In der Regel ist vorgesehen, dass entweder der Stecker oder die Buchse schwimmend gelagert ist, um ein automatisches Finden des Steckers und der Buchse zu erleichtern und Verspannungen in der Stecker-Buchse-Verbindung zu vermeiden. Auch gemäß diesem Stand der Technik werden die Dreipunktlagerung und die elektrische Schnittstelle gleichzeitig miteinander in Kontakt gebracht. Es sollen Verspannungen in der Stecker-Buchse-Verbindung vermieden werden. Wichtiger ist jedoch, dass die Dreipunktlagerung ordnungsgemäß ausgeführt wird. Treten Probleme in der Stecker-Buchse-Verbindung auf, hat dies auch Auswirkungen auf die Dreipunktlagerung und damit auf die Messgenauigkeit.

Weiterhin gehört zum Stand der Technik (EP 1 706 703 B1) eine Montageeinrichtung für ein Koordinatenmessgerät. Gemäß dieser Montageeinrichtung wird mit einem Magneten eine erste Haltekraft erzeugt und die für die Messung erforderliche zweite Haltekraft wird durch eine Spanneinrichtung erzeugt. Diese Montageeinrichtung ist für ein manuelles Wechseln einer Sensoreinrichtung vorgesehen. Zur Herstellung von beispielsweise elektrischen Kontakten sind vorgespannte federnde Kontaktelemente vorgesehen. Jedes dieser Kontaktelemente ist mit einer bestimmten Vorspannkraft vorgespannt. Diese von sämtlichen Kontaktelementen erzeugte Vorspannkraft muss zusätzlich zu der Gewichtskraft ab der Montageposition überwunden werden, in der die Kontaktelemente an entsprechenden Kontaktflächen des zweiten Verbindungselementes anstoßen. Diese zum Stand der Technik gehörende Montageeinrichtung weist den Nachteil auf, dass diese Vorspannkräfte während der Anordnung der Sensoreinrichtung an der Pinole wirken und überwunden werden müssen.

Das der Erfindung zugrunde liegende technische Problem besteht darin, ein Koordinatenmessgerät anzugeben, mit dem diese Nachteile vermieden werden. Darüber hinaus soll ein Verfahren zur Anordnung eines Sensors an einer Pinole oder an einer Messsystemwechselschnittstelle angegeben werden, mit dem eine zuverlässige Herstellung eines Kontaktes wenigstens eines Versorgungsanschlusses ermöglicht wird.

Dieses technische Problem wird durch ein Koordinatenmessgerät mit den Merkmalen gemäß Anspruch 1 sowie durch ein Verfahren mit den Merkmalen gemäß Anspruch 9 gelöst.

Das erfindungsgemäße Koordinatenmessgerät mit einem an einer Pinole oder an einer Messsystemwechselschnittstelle angeordneten Sensor oder einem Adapter für den Sensor und mit einer Lagervorrichtung, welche wenigstens ein an der Pinole oder an der Messsystemwechselschnittstelle angeordnetes Lager und wenigstens ein an dem Sensor oder dem Adapter angeordnetes Gegenlager aufweist und mit einer an der Pinole oder an der Messsystemwechselschnittstelle angeordneten Haltevorrichtung für den Sensor oder den Adapter und mit wenigstens einem Versorgungsanschluss, der zwischen der Pinole oder der Messsystemwechselschnittstelle und dem Sensor oder dem Adapter angeordnet ist, wobei der wenigstens eine Versorgungsanschluss einen Stecker und eine Kupplung aufweist, zeichnet sich dadurch aus, dass der Stecker oder die Kupplung verfahrbar an der Pinole oder an der Messsystemwechselschnittstelle und/oder an dem Sensor oder an dem Adapter angeordnet ist.

Das erfindungsgemäße Koordinatenmessgerät weist den Vorteil auf, dass ein Verbinden des Sensors möglichst kräftefrei erfolgt.

Unter Sensoren werden Messköpfe, optische Sensoren, Dreh-/Schwenkgelenke oder andere Messvorrichtungen verstanden. Die Sensoren können zur Anordnung an der Pinole oder der Messsystemwechselschnittstelle einen Adapter aufweisen. Die folgenden Ausführungen beziehen sich auf Sensoren und Adapter für Sensoren gleichermaßen, auch wenn nur Sensoren genannt sind.

Eine Messsystemwechselschnittstelle ist eine Schnittstelle zwischen der Pinole und dem Sensor.

Der Sensor wird vorteilhaft mit einer Dreipunktlagerung an der Pinole oder an der Messsystemwechselschnittstelle angeordnet. Hierzu greifen drei Lager in drei Gegenlager, so dass eine Sechspunktauflage ausgebildet wird. Hierdurch ist eine wiederholbare und hochgenau reproduzierbare Lagerung möglich.

Wird der Sensor an der Pinole oder an der Messsystemwechselschnittstelle angeordnet, muss zusätzlich zu der mechanischen Dreipunktlagerung noch wenigstens ein Versorgungsanschluss für den Sensör erzeugt werden. Der Sensor, beispielsweise ein taktiler oder messender Tastkopf, benötigt zumindest eine elektronische Datenübertragungsleitung zu dem Koordinatenmessgerät. Ein optischer Sensor benötigt eine optische Schnittstelle, die beispielsweise durch Anordnen von Lichtleitern in einer Ferrule hergestellt werden kann.

Die Sensoren benötigen beispielsweise elektrische, elektronische, optische, pneumatische und/oder hydraulische Versorgungsanschlüsse.

Durch Herstellung des Kontaktes des Versorgungsanschlusses wirken auf den Sensor Kräfte, die zusätzlich zu der Dreipunktlagerung und der Haltekraft wirken.

Als Beispiel wird im Folgenden ein elektrischer Anschluss beschrieben. Bei einem elektrischen Anschluss sind ein Stecker und eine Kupplung vorhanden. Der Stecker wird in der Kupplung angeordnet, um den elektrischen Anschluss auszubilden.

Ist der Stecker verkantet oder Pins des Steckers oder der Kupplung sind verbogen, wird beim Anordnen des Sensors durch die nicht ordnungsgemäße Verbindung des Steckers mit der Kupplung eine zusätzliche Kraft auf den Sensor erzeugt, die sich negativ auf die Dreipunktlagerung auswirken kann. Darüber hinaus können Stecker und Kupplung zerstört werden.

Bei dem erfindungsgemäßen Koordinatenmessgerät wird der Sensor an der Pinole oder an der Messsystemwechselschnittstelle angeordnet und die Haltevorrichtung für den Sensor klemmt den Sensor. Dadurch, dass der Stecker und/oder die Kupplung verfahrbar an der Pinole oder an der Messsystemwechselschnittstelle und/oder an dem Sensor angeordnet ist, werden der Stecker und/oder die Kupplung nicht gleichzeitig mit der Klemmung des Sensors in Kontakt gebracht, sondern durch das Verfahren des Steckers und/oder der Kupplung wird der Kontakt zwischen Stecker und Kupplung unabhängig von der Klemmung des Sensors durchgeführt.

Vorteilhaft ist die Kraft, die zum Verfahren des Steckers und/oder der Kupplung aufgebracht wird, kleiner als die Klemmkraft des Sensors, so dass der Sensor wiederholbar und reproduzierbar an der Pinole oder an der Messsystemwechselschnittstelle angeordnet werden kann.

Wird beim Verfahren des Steckers und/oder der Kupplung detektiert, dass der Kontakt nicht problemlos hergestellt werden kann, kann der Vorgang der Kopplung des Steckers und/oder der Kupplung abgebrochen oder unterbrochen werden, so dass Stecker und Kupplung nicht beschädigt werden.

Mit dem erfindungsgemäßen Koordinatenmessgerät ist es möglich, die Verbindung des Versorgungsanschlusses der Pinole oder Messsystemwechselschnittstelle und dem Sensor erst nach der Anordnung des Sensors an der Pinole oder an der Messsystemwechselschnittstelle und der Klemmung vorzunehmen, das heißt, die zusätzliche Kraft für die Herstellung des Kontaktes des wenigstens einen Versorgungsanschlusses wird vorteilhaft erst aufgebracht, nachdem der Sensor in der Endlage für einen Messvorgang angeordnet ist.

Der Stecker und/oder die Kupplung sind beweglich an der Pinole oder an der Messsystemwechselschnittstelle oder dem Sensor gelagert.

Besonders vorteilhaft wird erst die Haltekraft des Sensors an der Pinole erzeugt und der Sensor wird mittels der Dreipunktlagerung reproduzierbar an der Pinole angeordnet. Vorteilhaft wird erst anschließend der Stecker und/ oder die Kupplung verfahren. Der Stecker und/oder die Kupplung werden aktiv aufeinander zugefahren. Ein federndes Ausweichen des Steckers oder der Kupplung ist hierbei nicht vorgesehen.

Das erfindungsgemäße Koordinatenmessgerät sowie das erfindungsgemäße Verfahren sind besonders vorteilhaft bei einem automatischen Sensorwechsel einsetzbar. Der Sensor kann jedoch auch manuell eingewechselt werden.

Gemäß einer vorteilhaften Ausführungsform der Erfindung ist vorgesehen, dass der Stecker oder die Kupplung an der Pinole oder an der Messsystemwechselschnittstelle angeordnet ist und dass der Stecker oder die Kupplung pneumatisch, elektrisch und/oder hydraulisch verfahrbar ausgebildet ist.

Es besteht die Möglichkeit, dass der Stecker an der Pinole oder an der Messsystemwechselschnittstelle angeordnet ist und dass die Kupplung an dem Sensor angeordnet ist. Es besteht auch die Möglichkeit, dass der Stecker an dem Sensor angeordnet ist und die Kupplung an der Pinole oder an der Messsystemwechselschnittstelle.

Die Ausführungsform, dass der Stecker oder die Kupplung an der Pinole oder an der Messsystemwechselschnittstelle angeordnet und verfahrbar ist, weist den Vorteil auf, dass die Vorrichtung zum Verfahren des Steckers oder der Kupplung in oder an der Pinole oder der Messsystemwechselschnittstelle angeordnet ist, die ohnehin pneumatische, elektrische oder hydraulische Anschlüsse aufweist.

Gemäß einer weiteren vorteilhaften Ausführungsform der Erfindung ist der Stecker oder die Kupplung an einem Kolben angeordnet und der Kolben ist in einem Zylinder beweglich gelagert und der Zylinder ist mit Druckluft beaufschlagbar ausgebildet.

Diese Ausführungsform ist vorteilhaft, da Druckluft keine Verschmutzungen hervorruft, falls ein Leck auftritt. Durch die Anordnung des Kolbens in einem Zylinder wird der Stecker oder die Kupplung präzise verfahren, so dass eine wiederholbare und genaue Positionierung von Stecker und Kupplung möglich ist.

Gemäß einer weiteren besonders bevorzugten Ausführungsform der Erfindung ist vorgesehen, dass eine Haltevorrichtung für den Sensor oder Adapter vorgesehen ist und dass die Haltevorrichtung einen Druckluftanschluss für die Erzeugung einer Haltekraft des Sensors oder Adapters aufweist und dass ein Druckluftanschluss für den wenigstens einen Versorgungsanschluss vorgesehen ist und dass beide Druckluftanschlüsse gekoppelt ausgebildet sind.

Vorteilhaft wird die Haltekraft für den Sensor mittels Druckluft erzeugt. Beispielsweise wird der Sensor mit einem Haken, der an der Pinole oder an der Messsystemwechselschnittstelle angeordnet ist, in die Lager der Pinole oder der Messsystemwechselschnittstelle gezogen. Die für die Messung erforderliche Haltekraft wird vorteilhaft mit Druckluft erzeugt.

Gemäß der vorteilhaften Ausführungsform ist ein Druckluftanschluss für den wenigstens einen Versorgungsanschluss vorgesehen. Vorteilhaft ist der Zylinder, in dem der Kolben angeordnet ist, mit Druckluft beaufschlagbar. Gemäß der besonders bevorzugten Ausführungsform der Erfindung sind beide Druckluftanschlüsse gekoppelt ausgebildet. Diese Ausführungsform weist den Vorteil auf, dass bei Erzeugung der Haltekraft des Sensors über die Haltevorrichtung auch der Kontakt des Versorgungsanschlusses zwischen Stecker und Kupplung hergestellt wird. Es ist kein gesonderter Druckluftanschluss erforderlich.

Gemäß einer alternativen Ausführungsform ist vorgesehen, dass der Stecker oder die Kupplung in dem Sensor oder dem Adapter angeordnet ist und dass zum Verfahren des Steckers oder der Kupplung ein Motor in dem Sensor oder dem Adapter vorgesehen ist. Gemäß dieser Ausführungsform besteht die Möglichkeit, den in dem Sensor angeordneten Stecker oder die in dem Sensor angeordnete Kupplung zu verfahren. In diesem Fall kann das Gegenstück, das in der Pinole oder der Messsystemwechselschnittstelle angeordnet ist, feststehend ausgebildet sein. Es besteht jedoch auch die Möglichkeit, dass Stecker und Kupplung in dem Sensor und in der Pinole oder der Messsystemwechselschnittstelle verfahrbar sind. Das heißt, Stecker und Kupplung sind beide verfahrbar ausgebildet.

Gemäß einer weiteren vorteilhaften Ausführungsform der Erfindung ist vorgesehen, dass in oder an der Messsystemwechselschnittstelle wenigstens zwei krafterzeugende Vorrichtungen angeordnet sind, die als wenigstens zwei auf die Haltevorrichtung wirkende krafterzeugende Vorrichtungen ausgebildet sind und dass eine erste krafterzeugende Vorrichtung als Feder ausgebildet ist und dass eine zweite krafterzeugende Vorrichtung als pneumatisch betriebener Kolben ausgebildet ist.

Diese Ausführungsform weist den Vorteil auf, dass der Sensor automatisch ausgetauscht werden kann. Darüber hinaus wird zuverlässig eine reproduzierbare Lagerung des Sensors an der Pinole oder an der Messsystemwechselschnittstelle gewährleistet, da durch Erzeugung der ersten Haltekraft eine Vorpositionierung des Sensors an der Pinole oder an der Messsystemwechselschnittstelle vorgenommen wird, so dass Lager und Gegenlager korrekt ineinandergreifen. Durch die zweite krafterzeugende Vorrichtung wird die Haltekraft erzeugt, die für die Messung erforderlich ist. Die erste krafterzeugende Vorrichtung ist als Feder ausgebildet und die zweite krafterzeugende Vorrichtung ist als pneumatischer Kolben ausgebildet. Diese Ausgestaltung des Koordinatenmessgerätes weist den Vorteil auf, dass die Feder platzsparend in der Pinole oder der Messystemwechselschnittstelle angeordnet werden kann. Darüber hinaus weist die Feder kein großes Gewicht auf. Mit der zweiten krafterzeugenden Vorrichtung, die vorteilhaft als pneumatisch betriebener Kolben ausgebildet ist, kann auf einfache Art und Weise die für die Messung erforderliche Haltekraft erzeugt werden. Das Gewicht dieser Vorrichtung setzt sich hauptsächlich aus dem Gewicht der Ventile und einem luftdichten Raum zusammen. Diese Teile weisen ebenfalls ein sehr geringes Gewicht auf.

Mit dieser Ausführungsform wird vermieden, dass der Sensor nicht korrekt mit den Gegenlagern in den an der Pinole oder an der Messsystemwechselschnittstelle angeordneten Lagern sitzt.

Die Lager können beispielsweise als Kugeln ausgebildet sein und die Gegenlager als sogenannte V-Lager, beispielsweise bestehend aus zwei Zylindern. Die Gegenlager können auch als Plan-, V- und Trippellager ausgebildet sein. Während des Einwechselvorganges kann es vorkommen, dass die Lager nicht exakt in die Gegenlager greifen und so die reproduzierbare Lagerung nicht gewährleistet ist.

Durch die Ausführungsform mit den zwei Haltekräften wird dieses vermieden. Die erste Kraft wird vorteilhaft von einer ersten krafterzeugenden Vorrichtung ausgeübt und dient zur Vorpositionierung der Lager in den Gegenlagern. Anschließend wird vorteilhaft die für die Messung erforderliche Haltekraft mit der zweiten krafterzeugenden Vorrichtung, beispielsweise dem pneumatisch betriebenen Kolben, erzeugt.

Die beiden krafterzeugenden Vorrichtungen sind vorteilhaft unabhängig voneinander ausgebildet. Das bedeutet, dass die erste und die zweite krafterzeugende Vorrichtung unabhängig voneinander die Haltevorrichtung mit einer Kraft beaufschlagen können.

Gemäß einer vorteilhaften Ausführungsform der Erfindung ist vorgesehen, dass die Haltevorrichtung als Haken ausgebildet ist, beispielsweise als Klemmhaken.

An oder in der Pinole oder der Messsystemwechselschnittstelle ist die Haltevorrichtung vorteilhaft angeordnet. Die Ausführungsform als Haken ist mechanisch sehr zuverlässig.

Gemäß einer weiteren vorteilhaften Ausführungsform der Erfindung ist vorgesehen, dass wenigstens ein Sensor für eine Lageerkennung des Sensors oder des Adapters vorgesehen ist.

Diese Ausführungsform weist den Vorteil auf, dass nach Erkennen, dass der Sensor in der gewünschten Lage angeordnet ist, automatisch die beiden krafterzeugenden Vorrichtungen angesteuert werden. Durch die vorteilhaft als Druckfeder ausgebildete erste krafterzeugende Vorrichtung kann zunächst eine geringere Kraft als die für die Messung erforderliche Haltekraft aufgebracht werden, so dass die Lager und die Gegenlager die optimale Lage zueinander einnehmen. Danach kann mit einem Zeitversatz die zweite krafterzeugende Vorrichtung mittels Luftdruck die für die Messung erforderliche Haltekraft aufbringen.

Die Druckfeder verhindert, dass im Fehlerfall, wenn die zweite krafterzeugende Vorrichtung ausfallen sollte, der Sensor sich ungewollt von der Pinole oder der Messsystemwechselschnittstelle löst.

Vorteilhaft ist eine Sensorik vorgesehen, die einen derartigen Fehler erkennt. Der Betrieb des Koordinatenmessgerätes kann dann gestoppt werden.

Vorteilhaft ist vorgesehen, dass die als Feder ausgebildete erste krafterzeugende Vorrichtung als eine zumindest während einer Positionierung des Sensors oder des Adapters krafterzeugende Vorrichtung ausgebildet ist und dass die zweite krafterzeugende Vorrichtung als eine nach der Positionierung des Sensors eine Haltekraft erzeugende Vorrichtung ausgebildet ist.

Diese besonders bevorzugte Ausführungsform weist den Vorteil auf, dass die erste Kraft, nämlich die von der ersten krafterzeugenden Vorrichtung erzeugte Kraft während der Positionierung des Sensors wirkt. Hierdurch können sich die Lager und die Gegenlager exakt zueinander positionieren. Anschließend wird die zweite Kraft von der zweiten krafterzeugenden Vorrichtung erzeugt, nämlich die Haltekraft für den Sensor, die während der Messung erforderlich ist.

Hierdurch ist eine reproduzierbare Positionierung dauerhaft gewährleistet.

Die erste krafterzeugende Vorrichtung wirkt vorteilhaft während des Vorganges der Positionierung des Sensors. Die zweite krafterzeugende Vorrichtung wirkt vorteilhaft nach der Positionierung des Sensors, zumindest jedoch während des Messvorganges.

Gemäß einer weiteren vorteilhaften Ausführungsform ist vorgesehen, dass wenigstens eine Vorrichtung zum Erzeugen von Schwingungen zum Anregen des Sensors oder des Adapters vorgesehen ist.

Durch das Erzeugen von Schwingungen wird der Effekt verstärkt, dass sich die Lager exakt in den Gegenlagern positionieren, während die erste Haltekraft erzeugt wird. Nach dieser Positionierung wird die zweite Haltekraft erzeugt, die zumindest während des Messvorganges dauerhaft erhalten bleibt.

Gemäß einer weiteren vorteilhaften Ausführungsform der Erfindung ist vorgesehen, dass die Messsystemwechselschnittstelle an der Pinole des Koordinatenmessgerätes angeordnet ist. Die Messsystemwechselschnittstelle kann lösbar fest an oder wenigstens teilweise in der Pinole des Koordinatenmessgerätes angeordnet sein.

Die Messsystemwechselschnittstelle ist vorteilhaft nicht im üblichen Sinne auswechselbar, das heißt automatisch auswechselbar an der Pinole angeordnet, sondern die Messystemwechselschnittstelle ist vorteilhaft lösbar fest an oder wenigstens teilweise in der Pinole des Koordinatenmessgerätes angeordnet.

Die Anordnung wenigstens teilweise in der Pinole weist den Vorteil auf, dass der Messraum des Koordinatenmessgerätes vergrößert wird. Ist die Messsystemwechselschnittstelle an der Pinole und außerhalb der Pinole angeordnet, wird der Messraum des Koordinatenmessgerätes um die Bauhöhe der Messsystemwechselschnittstelle verkleinert.

Der Sensor, das heißt beispielsweise der Tastkopf oder ein optischer Sensor, kann ebenfalls an der Pinole oder wenigstens teilweise in der Pinole angeordnet sein. Der Sensor, das heißt der Tastkopf oder der optische Sensor, können auch an der Messsystemwechselschnittstelle oder wenigstens teilweise in der Messsystemwechselschnittstelle angeordnet sein.

Wird der Sensor wenigstens teilweise in der Pinole oder in der Messsystemwechselschnittstelle angeordnet, wird hierdurch ebenfalls eine Platzersparnis erzielt und der Messraum des Koordinatenmessgerätes ist vergrößert.

Das erfindungsgemäße Verfahren zur Anordnung eines Sensors oder eines Adapters an einer Pinole oder an einer reproduzierbaren Messsystemwechselschnittstelle eines Koordinatenmessgerätes, bei dem der Sensor oder der Adapter mit Gegenlagern an Lagern der Pinole oder der Messsystemwechselschnittstelle angeordnet wird und wenigstens eine Haltekraft für den Sensor oder den Adapter erzeugt wird, und bei dem ein Kontakt zwischen einem Stecker und einer Kupplung wenigstens eines Versorgungsanschlusses hergestellt wird, zeichnet sich dadurch aus, dass nach der Anordnung der Gegenlager des Sensors oder des Adapters in den Lagern der Pinole oder der Messsystemwechselschnittstelle der Stecker und/oder die Kupplung des wenigstens einen Versorgungsanschlusses verfahren wird.

Das erfindungsgemäße Verfahren weist den Vorteil auf, dass der Sensor mit Gegenlagern in den Lagern der Pinole oder der Messsystemwechselschnittstelle angeordnet wird und dass eine Haltekraft für den Sensor erzeugt wird, so dass der Sensor reproduzierbar in den Lagern der Pinole oder der Messsystemwechselschnittstelle angeordnet ist. Anschließend wird der Stecker und/oder die Kupplung des wenigstens einen Versorgungsanschlusses verfahren, derart, dass ein Kontakt zwischen dem Stecker und der Kupplung hergestellt wird. Die Erfindung weist den Vorteil auf, dass die Lagerung des Sensors an oder wenigstens teilweise in der Pinole oder der Messsystemwechselschnittstelle unbeeinflusst von der Ausbildung des Kontaktes des Versorgungsanschlusses erfolgt. Der Kontakt des Versorgungsanschlusses wird unter Aufbringung einer Kraft, die vorteilhaft geringer als die Haltekraft des Sensors ist, ausgeführt. Hierdurch wird vermieden, dass die Kupplung oder der Stecker bei der Herstellung des Kontaktes zwischen dem Sensor und der Pinole oder der Messsystemwechselschnittstelle möglicherweise beschädigt wird, wenn Stecker und Kupplung nicht ordnungsgemäß ineinandergreifen.

Durch das gesonderte Verfahren des Steckers und/oder der Kupplung wirken geringere Kräfte, so dass Stecker und Kupplung nicht beschädigt werden oder nicht so stark beschädigt werden, falls diese nicht ordnungsgemäß ineinandergreifen. Die Herstellung des Kontaktes des Versorgungsanschlusses kann auch unterbrochen werden, wenn detektiert wird, dass Stecker und Kupplung nicht ordnungsgemäß ineinandergreifen.

Gemäß einer vorteilhaften Ausführungsform des erfindungsgemäßen Verfahrens ist vorgesehen, dass nach der Anordnung der Gegenlager des Sensors oder des Adapters in den Lagern der Pinole oder der Messsystemwechselschnittstelle wenigstens eine Haltekraft für den Sensor oder den Adapter erzeugt wird, und dass gleichzeitig oder nach dem Erzeugen der wenigstens einen Haltekraft der Stecker oder die Kupplung verfahren wird, und dass ein Kontakt zwischen der Kupplung und dem Stecker hergestellt wird.

Vorteilhaft wird erst der Sensor mit den Gegenlagern in den Lagern der Pinole oder der Messsystemwechselschnittstelle angeordnet und es wird eine Haltekraft für den Sensor erzeugt. Gleichzeitig oder nach dem Erzeugen der Haltekraft wird der Stecker oder die Kupplung verfahren, so dass der Kontakt zwischen der Kupplung und dem Stecker hergestellt wird.

Wie schon beschrieben, kann hierdurch vermieden werden, dass zum einen durch die Kontaktherstellung zwischen dem Stecker und der Kupplung unerwünscht Kräfte auf die Lagerung des Sensors an der Pinole oder der Messsystemwechselschnittstelle wirken. Gleichzeitig kann eine Beschädigung des Steckers und/oder der Kupplung im Fehlerfalle vermieden werden.

Gemäß einer weiteren vorteilhaften Ausführungsform des erfindungsgemäßen Verfahrens ist vorgesehen, dass ein den Stecker oder die Kupplung tragender Kolben in einer Ruheposition angeordnet wird, dass der Sensor oder der Adapter mit den Gegenlagern in Lagern der Pinole oder der Messsystemwechselschnittstelle angeordnet wird, dass eine erste Kraft auf eine Haltevorrichtung für den Sensor oder den Adapter aufgebracht wird, um zwischen den Lagern und den Gegenlagern einen Kontakt herzustellen, dass anschließend eine zweite Haltekraft für den Sensor oder den Adapter erzeugt wird und dass gleichzeitig mit dem Erzeugen der zweiten Haltekraft für den Sensor oder den Adapter oder nach dem Erzeugen der zweiten Haltekraft der Stecker oder die Kupplung verfahren wird, und dass ein Kontakt zwischen dem Stecker und der Kupplung hergestellt wird.

Diese vorteilhafte Ausführungsform des erfindungsgemäßen Verfahrens weist den Vorteil auf, dass die beiden unterschiedlichen auf die Haltevorrichtung wirkenden Kräfte nacheinander, das heißt aufeinanderfolgend, erzeugt werden. Die erste Kraft dient zum Positionieren der Lager in den Gegenlagern. Das wenigstens eine Lager und das wenigstens eine Gegenlager werden durch Erzeugen der ersten Kraft in Kontakt gebracht und/oder vorgeklemmt. Durch Erzeugung der zweiten Kraft wird der Sensor an oder wenigstens teilweise in der Pinole oder der Messsystemwechselschnittstelle geklemmt.

Hierdurch sind eine hochgenaue Lagerung und eine reproduzierbare Lagerung möglich.

Ein wesentlicher Vorteil liegt dabei darin, dass das Verfahren vollautomatisch durchgeführt werden kann.

Gemäß einer weiteren vorteilhaften Ausführungsform des Verfahrens ist vorgesehen, dass die erste Haltekraft mittels Federn erzeugt wird und dass die zweite Haltekraft pneumatisch erzeugt wird und dass das Verfahren des Steckers oder der Kupplung pneumatisch durchgeführt wird.

Die vorgesehene Feder weist ein geringes Gewicht auf und erzeugt eine Haltekraft, die ein Vorpositionieren des Sensors zuverlässig ermöglicht. Die zweite Haltekraft, die für die Messung erforderlich ist, wird vorteilhaft pneumatisch erzeugt. Hierdurch kann auf einfache Art und Weise die für die Messung erforderliche Haltekraft des Sensors erzeugt werden.

Das Verfahren des Steckers oder der Kupplung erfolgt ebenfalls gemäß der besonders vorteilhaften Ausführungsform pneumatisch. Hierdurch ist es möglich, die Druckanschlüsse für die Erzeugung der zweiten Haltekraft und für das Verfahren des Steckers oder der Kupplung zu koppeln, so dass die Erzeugung der zweiten Haltekraft und der Kraft für die Kupplung des Steckers gleichzeitig erzeugt wird. Darüber hinaus kann hierdurch ein weiterer Druckluftanschluss vermieden werden.

Gemäß einer weiteren vorteilhaften Ausführungsform des erfindungsgemäßen Verfahrens ist vorgesehen, dass die zweite Kraft zusätzlich zu der ersten Kraft auf die Haltevorrichtung wirkt.

Hierdurch ist gewährleistet, dass der Sensor immer durch eine Haltekraft gehalten wird. Die Kraft zur finalen Klemmung des Sensors ist vorteilhaft größer als die Kraft, die während der Vorpositionierung aufgebracht wird, so dass es von Vorteil ist, wenn beide Kräfte während der Messung auf die Haltevorrichtung wirken.

Gemäß einer weiteren vorteilhaften Ausführungsform der Erfindung ist vorgesehen, dass die erste Kraft kleiner als die zweite Kraft ist. Die erste Kraft soll relativ gering sein. Die Kraft soll so groß sein, dass eine Vorpositionierung der Lager in den Gegenlagern erfolgt und noch keine Klemmung erfolgt. Würde schon die Klemmung erfolgen, würde durch die schnelle schlagartige Freisetzung der ersten Kraft der Kraftschluss schlagartig vollzogen. Dabei kann es vorkommen, dass die positionsgebenden Elemente der Lager und Gegenlager durch zum Beispiel Reibung nicht in ihre Endpositionen gelangen. Damit wird eine fehlerhafte Position eingenommen, was sich in fehlerhaften Messungen niederschlägt.

Gemäß einer weiteren vorteilhaften Ausführungsform der Erfindung ist die Vorschubkraft zum Erzeugen der Verbindung zwischen Stecker und Kupplung geringer als die Haltekraft, mit der der Sensor während der Messung gehalten wird.

Vorteilhaft beträgt die Vorschubkraft für die Herstellung der Verbindung zwischen Stecker und Kupplung maximal 10%, vorteilhaft 5% oder weniger als 5% der Haltekraft, die auf den Sensor während eines Messvorganges wirkt.

Gemäß einer weiteren vorteilhaften Ausführungsform der Erfindung ist vorgesehen, dass wenigstens zwei Versorgungsanschlüsse vorgesehen sind, und dass Stecker und Kupplungen der Versorgungsanschlüsse gleichzeitig oder nacheinander in Kontakt gebracht werden.

Grundsätzlich besteht die Möglichkeit, dass ein Versorgungsanschluss vorgesehen ist, der mehrere Versorgungsleitungen, beispielsweise elektrische und/oder elektronische und/oder pneumatische Versorgungsleitungen aufweist. Es besteht jedoch auch die Möglichkeit, getrennte Versorgungsanschlüsse vorzusehen. Beispielsweise besteht die Möglichkeit, elektrische und elektronische Leitungen in einem Versorgungsanschluss vorzusehen und für eine pneumatische Versorgung des Sensors einen gesonderten Versorgungsanschluss vorzusehen. Sind verschiedene Versorgungsanschlüsse vorgesehen, können diese gleichzeitig oder nacheinander in Kontakt gebracht werden.

Gemäß einer weiteren vorteilhaften Ausführungsform der Erfindung ist vorgesehen, dass der Stecker oder die Kupplung bis zu einem Endpunkt am Sensor oder am Adapter oder bis zu einem Anschlag an der Pinole oder an der Messsystemwechselschnittstelle verfahren wird.

Gemäß dieser vorteilhaften Ausführungsform der Erfindung ist vorgesehen, dass eine Endlage des Steckers in der Kupplung einen Endpunkt aufweist und dass dieser Endpunkt vorteilhaft am Sensor angeordnet ist oder dass der Endpunkt als ein Anschlag an der Pinole oder an der Messsystemwechselschnittstelle ausgebildet ist.

Eine weitere vorteilhafte Ausführungsform des erfindungsgemäßen Verfahrens sieht vor, dass während oder nach Erzeugung der ersten Kraft der Sensor oder der Adapter durch eine dritte Kraft wenigstens einmal bewegt wird. Diese Kraft kann ein Rütteln oder Vibrieren des Sensors oder des Adapters bewirken, so dass die Lager und die Gegenlager ihre vorgegebene Position zueinander einnehmen.

Die Erzeugung der dritten Kraft erfolgt, vorteilhaft in der Lagerebene. Das heißt, die dritte Kraft wird vorteilhaft in der Ebene erzeugt, in der die Lager und die Gegenlager ineinandergreifen.

Zum Lösen eines Sensors oder eines Adapters von einer Pinole oder einer Messsystemwechselschnittstelle eines Koordinatenmessgerätes wird vorteilhaft eine Haltekraft des Sensors oder des Adapters und eine Haltekraft für einen Stecker und eine Kupplung gelöst.

Soll der Sensor eingewechselt werden gegen einen anderen Sensor, wird nicht nur die Haltekraft für den Sensor gelöst, sondern auch die Haltekraft für den Stecker und die Kupplung des wenigstens einen Versorgungsanschlusses.

Grundsätzlich besteht auch die Möglichkeit, dass der Sensor von der Pinole oder der Messsystemwechselschnittstelle gelöst wird und sich bei dem Lösen der Kontakt zwischen dem Stecker und der Kupplung des wenigstens einen Versorgungsanschlusses ebenfalls automatisch löst.

Das erfindungsgemäße Koordinatenmessgerät und das erfindungsgemäße Verfahren weisen den Vorteil auf, dass der Verschleiß der Kontakte des wenigstens einen Versorgungsanschlusses geringer ist als bei den aus der Praxis bekannten Versorgungsanschlüssen. Da die Kontakte nicht mit der Haltekraft des Sensors hergestellt werden, sondern mit einer Haltekraft, die auf den Stecker und die Kupplung wirkt, ist der Verschleiß geringer.

Darüber hinaus weisen das erfindungsgemäße Koordinatenmessgerät und das erfindungsgemäße Verfahren den Vorteil auf, dass bei den Kontakten des wenigstens einen Versorgungsanschlusses die Toleranzen größer sein können.

Darüber hinaus werden fehlerhafte Verbindungen vermieden. Wird der Sensor mit der Haltekraft in die Lager gezogen und die Kontakte zwischen Stecker und Kupplung des wenigstens einen Versorgungsanschlusses werden direkt ausgebildet, können zum Beispiel verbogene Pins zerstört wird, was wiederum Gewährleistungs- oder Regressansprüche von Kunden nach sich zieht.

Ein weiterer Vorteil besteht darin, dass die Gestaltung freier ist. Zum Beispiel können Pins rechteckig ausgebildet sein, wenn diese günstiger sind als beispielsweise runde Pins. Die Toleranzen können größer sein.

Sind mehrere Versorgungsanschlüsse vorgesehen, besteht die Möglichkeit, Versorgungsanschlüsse, die beim Einwechseln von bestimmten Sensoren nicht benötigt werden, nicht zu verbinden. Optische Sensoren benötigen zum Beispiel keinen Druckluftanschluss, so dass dieser Druckluftanschluss in dem Fall des Einwechselns eines optischen Sensors nicht verbunden wird.

Es ist möglich, nur die benötigten Kontakte herzustellen.

Weitere Merkmale und Vorteile der Erfindung ergeben sich anhand der zugehörigen Zeichnungen, in denen verschiedene Ausführungsformen eines erfindungsgemäßen Koordinatenmessgerätes nur beispielhaft dargestellt sind, ohne die Erfindung auf diese Ausführungsbeispiele zu beschränken. In den Zeichnungen zeigen:
- Fig. 1: ein Koordinatenmessgerät in Portalbauweise in perspektivischer Ansicht;
- Fig. 2: eine Pinole mit Messsystemwechselschnittstelle, Tastkopf und Tastkopfhalter, teilweise im Längsschnitt;
- Fig. 3: eine Haltevorrichtung in geöffneter Seitenansicht;
- Fig. 4: eine Dreipunktlagerung im Längsschnitt;
- Fig. 5: eine Dreipunktlagerung in Draufsicht;
- Fig. 6: ein Gegenstück zur Dreipunktlagerung der Fig. 5 in Draufsicht;
- Fig. 7: ein Ausführungsbeispiel einer Pinole mit Dreh-/Schwenkgelenk mit Tastkopf im Längsschnitt;
- Fig. 8: eine Haltevorrichtung im Längsschnitt;
- Fig. 9: eine Einzelheit der Fig. 8 im Längsschnitt;
- Fig. 10: eine Haltevorrichtung in geöffnetem Zustand im Längsschnitt;
- Fig. 11: eine Messsystemwechselschnittstelle mit angeordnetem Tastkopf im Längsschnitt.

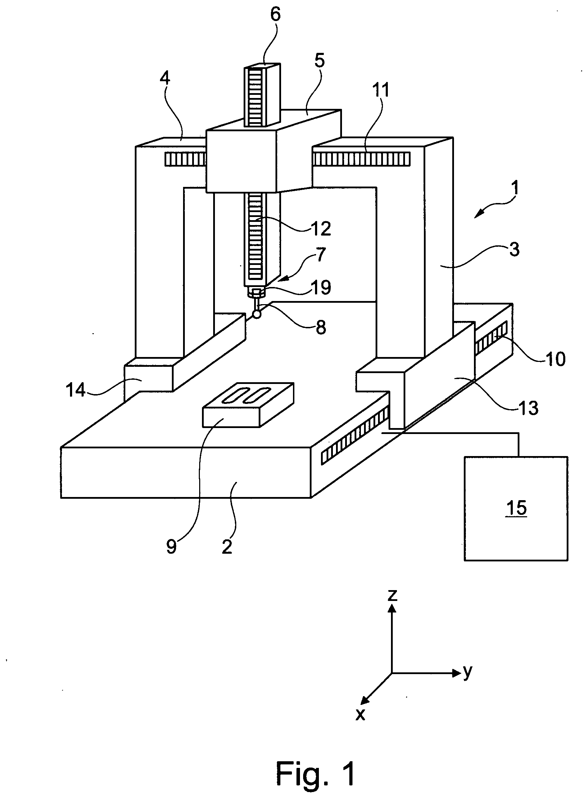

Fig. 1 zeigt ein Koordinatenmessgerät 1 in Portalbauweise mit einem Werkzeugtisch 2 und einem Portal 3. Das Portal 3 weist eine Traverse 4 auf. An der Traverse 4 ist ein Schlitten 5 angeordnet, an dem wiederum eine Pinole 6 angeordnet ist. Das Portal 3 ist in X-Richtung beweglich, der Schlitten 5 in Y-Richtung und die Pinole 6 in Z-Richtung. An der Pinole 6 ist ein Sensor 7 angeordnet, der als Tastkopf 7 ausgebildet ist, und der einen Taststift 8 trägt. Auf dem Messtisch 2 des Koordinatenmessgerätes ist ein Werkstück 9 angeordnet.

An dem Messtisch 2 ist ein Maßstab 10 angeordnet, an der Traverse 4 ein Maßstab 11 und an der Pinole 6 ein Maßstab 12. Über entsprechende Wegmesssysteme (nicht dargestellt) kann die Position des Taststiftes 8 erfasst werden. Das Portal 3 weist Portalfüße 13, 14 auf, mit denen das Portal 3 an dem Messtisch 2 beweglich angeordnet ist. Über einen Computer 15, der auch eine Steuereinheit enthält, werden die Messwerte erfasst und verarbeitet.

Grundsätzlich besteht auch die Möglichkeit, dass das Portal 3 feststehend angeordnet ist und der Werkzeugtisch mit dem Werkstück relativ zu dem Portal verfahren wird.

Darüber hinaus ist auch bekannt, zum Beispiel einen Drehtisch auf dem Werkzeugtisch 2 anzuordnen.

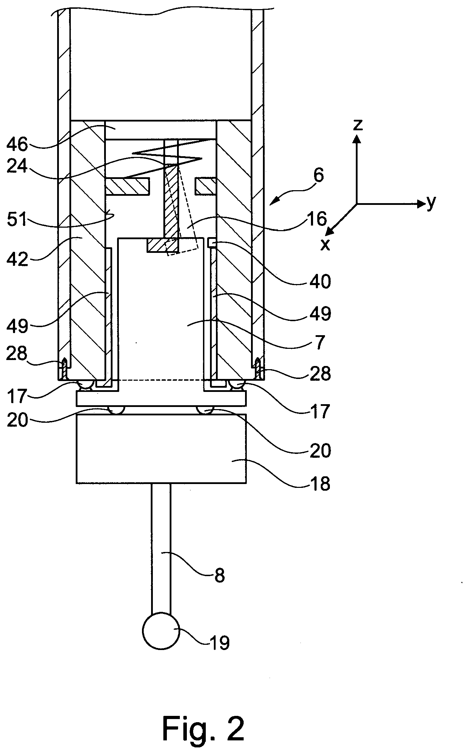

Fig. 2 zeigt die Pinole 6 in schematischer Darstellung. In der Pinole 6 sind eine Messsystemwechselschnittstelle 42 und der Tastkopf 7 angeordnet. Der Tastkopf 7 wird mittels eines in Y-Richtung schwenkbaren und in Z-Richtung bewegbaren Hakens 16 mittels einer Dreipunktlagerung 17 in der Pinole 6 fixiert. An dem Tastkopf 7 ist eine Taststifthalterung 18 angeordnet, die den Taststift 8 mit einem Tastelement 19 trägt. Die Taststifthalterung 18 ist ebenfalls mittels einer Dreipunktlagerlagerung 20 an dem Tastkopf 7 lösbar befestigt. Die Haltemittel für die Taststifthalterung 18 sind in Fig. 2 nicht dargestellt.

In Fig. 2 ist lediglich schematisch eine Messsystemwechselschnittstelle 42 vorgesehen. Die Messsystemwechselschnittstelle 42 weist eine Haltevorrichtung 46 für den Haken 16 für einen Adapter eines Sensors, Tastkopfs oder Dreh-/Schwenkgelenks auf. An der Messsystemwechselschnittstelle 42 ist auch die Dreipunktlagerung 17 angeordnet.

Die Messsystemwechselschnittstelle 42 ist zumindest teilweise innerhalb der Pinole 6 angeordnet. Die Messsystemwechselschnittstelle 42 ist mit Schrauben 28 an der Pinole 6 angeordnet. Durch Lösen der Schrauben 28 kann die Messsystemwechselschnittstelle 42 aus der Pinole 6 entfernt werden.

Damit der Tastkopf 7 beim Wechseln keinen Schaden nimmt, falls er mit einer Innenwand der Messsystemwechselschnittstelle 42 in Kontakt kommt, ist eine Schutzvorrichtung 49 vorgesehen. Die Schutzvorrichtung 49 ist beispielsweise aus Kunststoff gebildet. Die Schutzvorrichtung 49 ist in Fig. 2 flächig ausgebildet. Die Schutzvorrichtung 49 ist in dem Ausführungsbeispiel als Segment an einer Innenfläche 51 der Messsystemwechselschnittstelle 42 angeordnet. Die Schutzvorrichtung 49 kann auch eine größere axiale Ausdehnung in Richtung einer Längsachse der Pinole 6 aufweisen, als in Fig. 2 dargestellt. Sie kann segmentweise mit mindestens einem Segment oder kontinuierlich ausgebildet sein.

In der Messsystemwechselschnittstelle 42 ist ein Sensor 40 angeordnet, der erkennt, ob der Tastkopf 7 sich in der in Fig. 2 dargestellten Position befindet, das heißt, in der der Haken 16 eine Verriegelung, das heißt eine Klemmung, vornehmen kann.

Nach Erkennen des Tastkopfes 7 in der Verriegelungsposition wird der Haken 16 von der gestrichelt dargestellten Position in die schraffiert dargestellte Position bewegt.

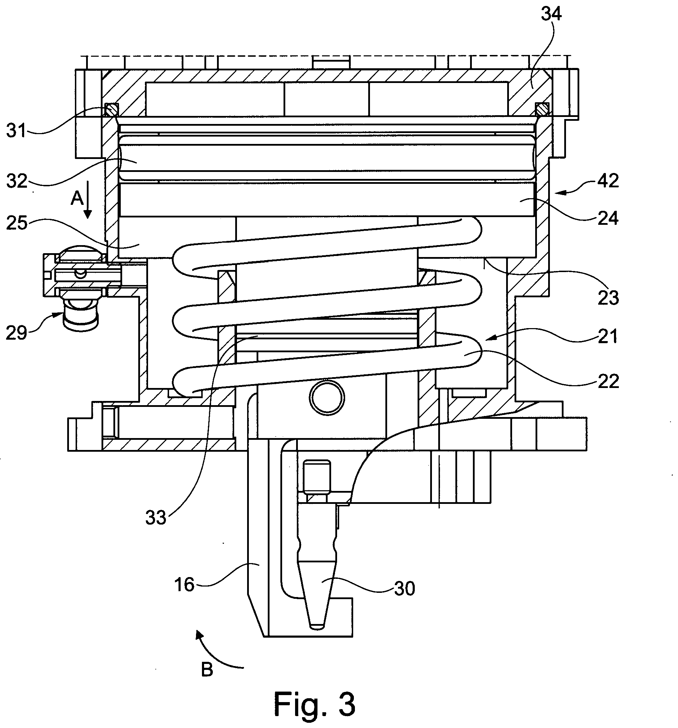

Die Schritte des Verriegelns werden in Fig. 3 erläutert.

Fig. 3 zeigt die Haltevorrichtung der Messsystemwechselschnittstelle 46 mit dem Haken 16, der hinter einer Platte eines Adapters eines Sensors, eines Tastkopfes 7 oder eines Dreh-/Schwenkgelenkes 52 (nicht dargestellt) greift. Der Haken 16 wird mit einer ersten Vorrichtung 21, die aus einer Druckfeder 22 besteht, mit einer ersten Kraft mit einer Kraftkomponente entgegen der eingezeichneten Richtung A beaufschlagt, die eine Vorpositionierung des Tastkopfes 7 (in Fig. 3 nicht dargestellt) bewirkt. Eine zweite Vorrichtung 23, die aus einem mit Druckluft beaufschlagten Kolben 24 gebildet ist, übt eine zweite Haltekraft mit einer Kraftkomponente entgegen der eingezeichneten Richtung A auf den Haken 16 aus. Diese zweite Haltekraft ist die Kraft, die zusätzlich während des Messvorganges auf den Tastkopf 7 (nicht dargestellt) wirkt. Der Kolben 24 ist beweglich in einem mit Druckluft beaufschlagbaren Raum 25 angeordnet. Für den Einlass und Auslass von Druckluft ist ein Druckluftanschluss 29 vorgesehen. Wird der Raum 25 mit Druckluft beaufschlagt, wird der Kolben 24 in die in Fig. 3 dargestellte Position gedrückt. Der Haken 16 klemmt den Tastkopf 7 final (in Fig. 3 nicht dargestellt).

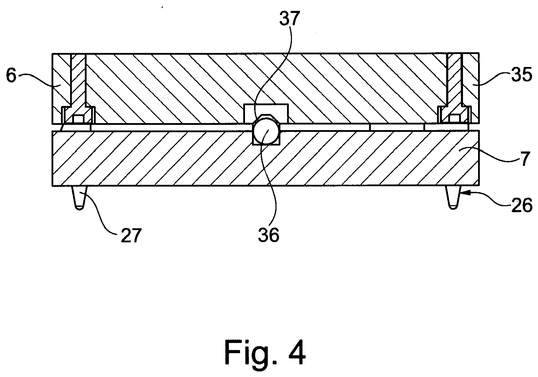

In Fig. 3 ist ein Zentrierstift 30 dargestellt. Üblicherweise ist ein zweiter in Fig. 3 nicht dargestellter Zentrierstift vorgesehen, damit der Tastkopf 7 (in Fig. 3 nicht dargestellt) in eine vordefinierte Position gebracht wird, damit die Lager und Gegenlager, die in den Fig. 4 bis 6 näher beschrieben werden, angeordnet werden.

Weiterhin sind Dichtungen 31, 32, 33 vorgesehen, damit der Raum 25 nach außen abgedichtet wird, damit der Kolben 24 in dem Raum durch die Druckluft bewegbar ist. Der Kolben 24 kann von oben mit Druckluft beaufschlagt und damit in Richtung des Pfeiles A bewegt werden, so dass die Druckfeder gestaucht wird und der Haken 16 in Richtung des Pfeiles B geschwenkt werden kann und somit den Tastkopf 7 (in Fig. 3 nicht dargestellt) freigibt.

Fällt das Druckluftsystem 23 aus, so hält immer noch die erste Vorrichtung 21 mit der Druckfeder 22 den Haken 16 in der in Fig. 3 dargestellten Position, so dass der Tastkopf 7 (in Fig. 3 nicht dargestellt) sich nicht von alleine lösen kann.

Die Messsystemwechselschnittstelle 42 weist einen Deckel 34 auf, der die Vorrichtungen 21, 23 nach oben hin in Richtung Pinole (nicht dargestellt) abschließt.

Wenn der Sensor 40 (in Fig. 2 dargestellt) erkennt, dass der Tastkopf 7 in der Position angeordnet ist, in dem der Haken 16 den Tastkopf 7 klemmen kann, wird in einem ersten Schritt die erste Vorrichtung 21, das heißt die Druckfeder 22, aktiviert, so dass eine erste Haltekraft auf den Haken 16 wirkt. Die Haltekraft ist derart ausgelegt, dass die Lager und die Gegenlager, die in den Fig. 4 bis 6 beschrieben werden, korrekt ineinandergreifen. Sollten die Lager und Gegenlager zu Beginn der Positionierung nicht exakt ineinandergreifen, ist die Haltekraft lediglich so groß, dass die Lager und die Gegenlager die korrekte Endposition zueinander einnehmen können. Anschließend wird automatisch in einem zweiten Schritt die zweite Haltekraft durch die zweite Vorrichtung 23 aufgebracht. Der Kolben 24 wird mit Druckluft beaufschlagt, so dass er sich entgegen der Richtung des Pfeiles A bewegt und der Tastkopf 7 wird final geklemmt.

Ein Klemmen des Tastkopfes 7 bedeutet, dass die für eine Messung erforderliche Haltekraft auf den Tastkopf 7 durch den Haken 16 aufgebracht wird. Der Tastkopf 7 wird nicht aus den Lagern gelöst, wenn eine äußere Kraft durch eine Antastung auf den Tastkopf 7 ausgeübt wird.

Das Lösen des Tastkopfes 7 erfolgt in umgekehrter Reihenfolge. Der Kolben 24 wird derart mit Druckluft beaufschlagt, dass er sich in Richtung des Pfeiles A bewegt. Hierzu wird die der Pinole (nicht dargestellt) zugewandte Seite des Kolbens 24 mit Druckluft beaufschlagt.

Durch die Beaufschlagung des Kolbens 24 mit Druckluft auf der federabgewandten Seite wird der Kolben 24 in Richtung des Pfeiles A bewegt. Hierdurch drückt der Kolben 24 die Feder 22 entgegen der Federkraft zusammen.

Anschließend gibt die Feder 22 den Haken 16 frei, so dass er sich in Richtung des Pfeiles B bewegt, das heißt in die in Fig. 2 dargestellte gestrichelte Position.

Sollte die zweite krafterzeugende Vorrichtung 23 ausfallen, drückt die Feder 22 den Kolben 24 entgegen der Pfeilrichtung nach oben. Hierdurch ist gewährleistet, dass der Haken 16 sich nicht öffnet und der Tastkopf 7 (in Fig. 3 nicht dargestellt) sich nicht ungewollt löst.

In Fig. 4 ist eine Ebene 35 zwischen der Pinole 6 und dem Tastkopf 7 mit dem Dreipunktlager im Detail dargestellt. Das Dreipunktlager besteht aus den Lagern 37 und den Gegenlagern 36, die als Kugeln oder Kugelabschnitte ausgebildet sind. Darüber hinaus sind Zentrierstifte 26, 27 vorhanden, die zum einen den Tastkopf 7 beim Einsetzen vorzentrieren und zum anderen bei asymmetrischer Ausgestaltung der Zentrierstifte 26, 27 ein falsches, das heißt verdrehtes Einsetzen des Tastkopfes 7 verhindern.

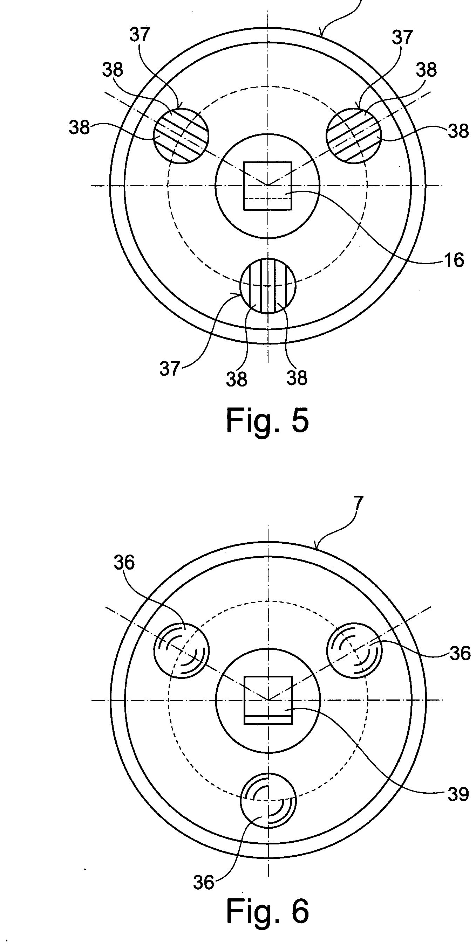

Fig. 5 zeigt das Dreipunktlager 17 in Draufsicht. In Fig. 5 ist die Pinole 6 mit den drei Lagern 37 dargestellt. Die Lager 37 weisen jeweils zwei Zylinder 38 auf. Darüber hinaus ist der Haken 16 vorgesehen.

Fig. 6 zeigt den Tastkopf 7, in dem drei Halbkugeln 36 angeordnet sind. Die Halbkugeln 36 kommen, wenn der Tastkopf 7 an der Pinole 6 angeordnet wird, mit den Zylindern 38 an insgesamt sechs Punkten in Kontakt. Hierdurch wird eine reproduzierbare und hochpräzise Lagerung erreicht. Der Tastkopf 7 weist eine Aufnahme 39 für den Haken 16 auf.

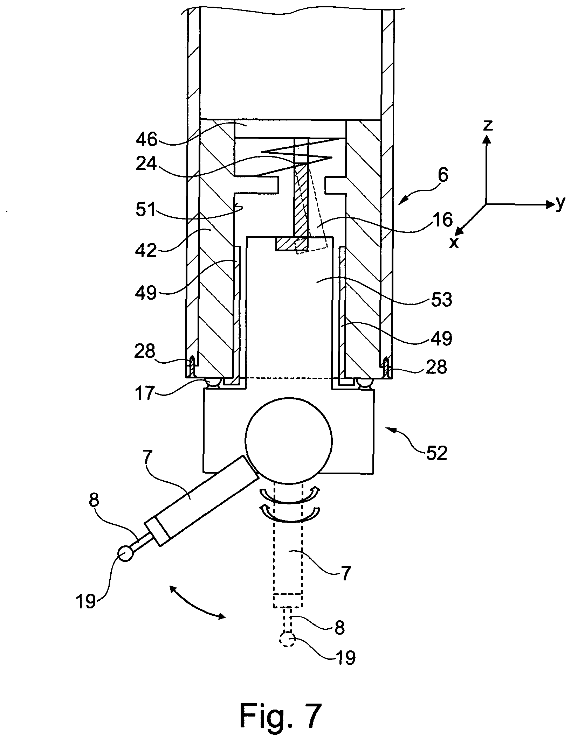

Fig. 7 zeigt die Pinole 6 mit der in der Pinole 6 angeordneten Messsystemwechselschnittstelle 42. In der Messsystemwechselschnittstelle 42 ist ein Adapter 53 eines Dreh-/Schwenkgelenkes 52 angeordnet. An Stelle des Tastkopfes 7, wie er in Fig. 2 dargestellt ist, ist in dem Messsystemwechselschnittstelle 42 der Adapter 53 des Dreh-/ Schwenkgelenkes 52 angeordnet. An dem Dreh-/Schwenkgelenk 52 ist ein Tastkopf 7 vorgesehen, an dem auswechselbar ein Taststift 8 mit einer Tastkugel 19 anordbar ist. Der Taststift 8 kann in die gestrichelt dargestellte Position geschwenkt werden.

Der Adapter 53 des Dreh-/Schwenkgelenkes 52 ist mittels des Hakens 16 und einer Dreipunktlagerung 17 reproduzierbar in der Messsystemwechselschnittstelle 42 angeordnet. Die Schutzvorrichtung 49 schützt den Adapter 53 beim Einwechseln vor Schäden.

Die Messsystemwechselschnittstelle 42 ist innerhalb der Pinole 6 angeordnet. Die Messsystemwechselschnittstelle 42 ist mit Schrauben 28 an der Pinole 6 angeordnet. Durch Lösen der Schrauben 28 kann die Messsystemwechselschnittstelle 42 aus der Pinole 6 entfernt werden.

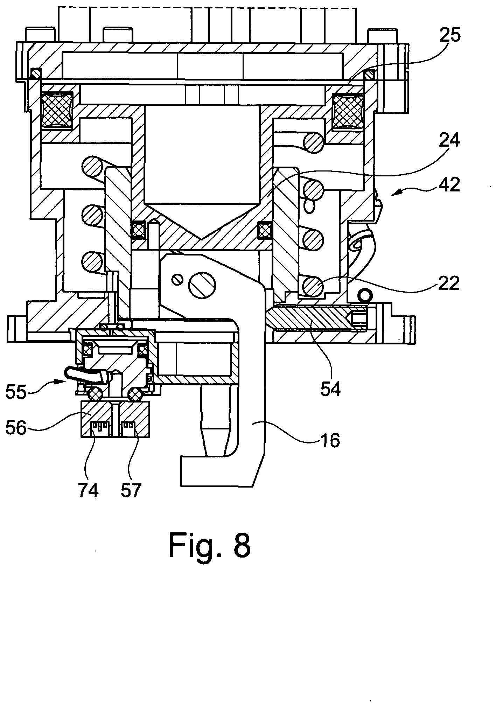

Fig. 8 zeigt die Messsystemwechselschnittstelle 42 mit der Druckfeder 22, dem Kolben 24 und dem mit Druckluft beaufschlagbaren Raum 25. Der Kolben 24 befindet sich in einer oberen Stellung, das heißt der Raum 25 ist nicht mit Druckluft beaufschlagt, und es wirkt die Federkraft der Feder 22. Der Haken 16 befindet sich in einer Geschlossenstellung dadurch, dass der Kolben 24 nach oben gefahren ist und ein Stift 54 den Haken 16 in die in Fig. 8 dargestellte Stellung drückt.

Zusätzlich ist ein Versorgungsanschluss 55 vorgesehen, der eine Kupplung 56 aufweist. Die Kupplung 56 weist Aufnahmen 57, 74 auf, in die Stecker (in Fig. 8 nicht dargestellt) eines Sensors 7 (in Fig. 8 nicht dargestellt) greifen.

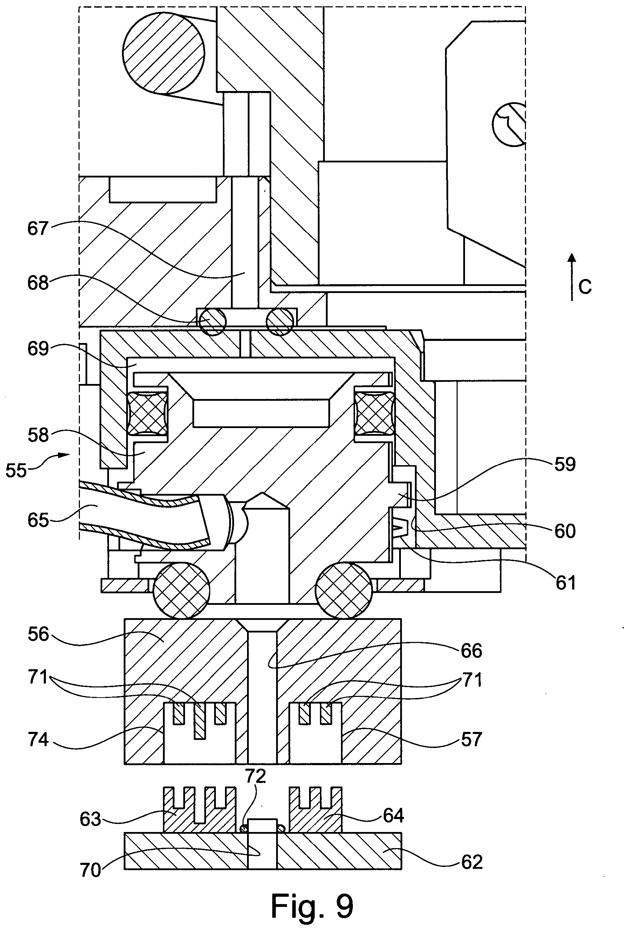

Der Versorgungsanschluss 55 ist in Fig. 9 dargestellt. Die Aufnahmen 57, 74 sind lediglich schematisch dargestellt.

Der Versorgungsanschluss 55 weist einen Kolben 58 auf, der eine Schulter 59 aufweist. Die Schulter 59 ist als umlaufende Schulter ausgebildet und ist in einer Nut 60 angeordnet. In der Nut 60 ist darüber hinaus eine Feder 61 angeordnet, die als Druckfeder ausgebildet ist.

Die Federkraft der Druckfeder 61 drückt den Kolben 58 in Richtung des Pfeiles C in eine Ruheposition. Lediglich schematisch ist ein Stecker 62 dargestellt, der Steckkontakte 63, 64 trägt. Der Stecker 62 ist an einem Tastkopf 7 (in Fig. 9 nicht dargestellt) angeordnet.

Der Versorgungsanschluss 55 weist einen Druckluftanschluss 65 auf. Dieser Druckluftanschluss dient als Luftzufuhr für den Tastkopf 7. Die Druckluft wird durch eine Bohrung 66 geleitet. Ein weiterer Druckluftanschluss 67, der durch einen O-Ring 68 abgedichtet ist, führt Luft in einen Raum 69. Wird der Druckluftanschluss 67 mit Druckluft beaufschlagt, wird der Kolben 58 entgegen die Richtung des Pfeiles C nach unten gedrückt. Dabei setzen sich die Aufnahmen 57, 74 auf die Steckkontakte 63, 64 und stellen einen Kontakt her. Darüber hinaus wird mit der Bohrung 66 eine Verbindung zu der Bohrung 70 geschaffen, so dass ein Druckluftanschluss für den Tastkopf über den Stecker 62 vorhanden ist. Die Steckkontakte 63, 64 erzeugen mit Pins 71 der Aufnahmen 57, 74 der Kupplung 56 einen elektrischen oder elektronischen Kontakt.

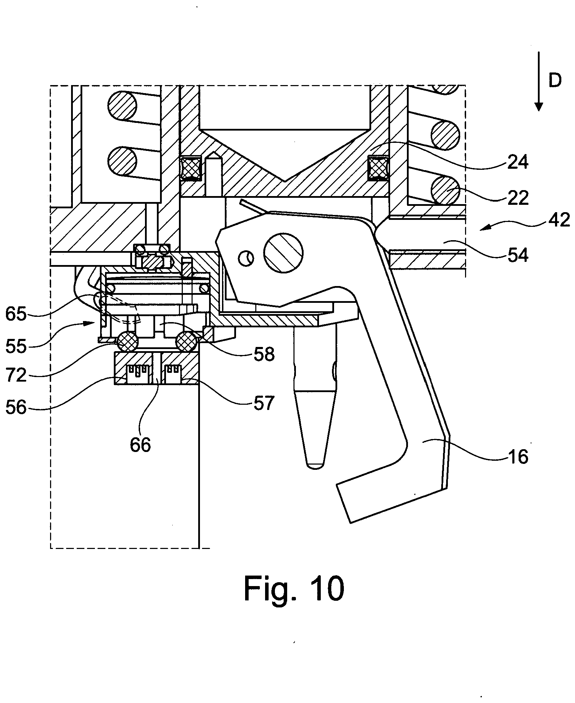

Fig. 10 zeigt die Messsystemwechselstelle 42 mit einem geöffneten Haken 16. Der Kolben 24 ist in Richtung des Pfeiles D bewegt worden. Der Stift 54 gibt den Haken 16 frei, so dass dieser aufschwenken kann.

Der Versorgungsanschluss 55 mit den Kupplungen 56, 57 ist lediglich schematisch dargestellt.

In Fig. 10 befindet sich der Kolben 58 in einer oberen Endlage, das heißt der Versorgungsanschluss ist in einer Ruheposition angeordnet. Ein O-Ring 72 dient zur Abdichtung des Druckluftanschlusses.

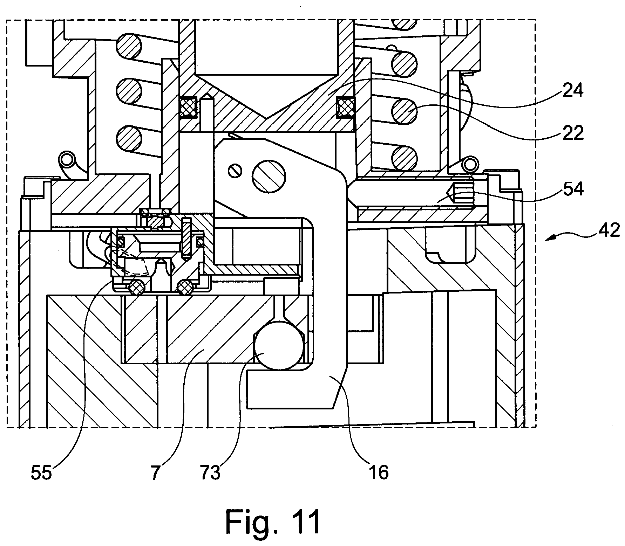

Fig. 11 zeigt die Messsystemwechselschnittstelle 42 mit dem Kolben 24, der Druckfeder 22, dem Haken 16 und dem Versorgungsanschluss 55. An der Messsystemwechselschnittstelle 42 ist der Tastkopf 7 angeordnet. Der Haken 16 ist in einer Geschlossenstellung. Der Haken 16 wird durch den Stift 54 in der Geschlossenstellung gehalten. Der Haken 16 greift hinter eine Kugel 73 des Tastkopfes 7 und hält den Tastkopf 7 somit an der Messsystemwechselschnittstelle 42.

Zur Anordnung des Tastkopfes 7 an der Messsystemwechselschnittstelle 42 befindet sich der Versorgungsanschluss 55, wie in Fig. 9 dargestellt.

Der Tastkopf 7 wird an der Messsystemwechselschnittstelle 42 angeordnet und es gelangen die Lager 37 mit den Gegenlagern 36, die als Kugelabschnitte ausgebildet sind, in Kontakt. Anschließend wird der Raum 69, wie in Fig. 9 dargestellt, mit Druckluft beaufschlagt. Der Kolben 58 bewegt sich entgegengesetzt zu der Richtung des Pfeiles C, so dass die Aufnahmen 57, 74 sowie die Bohrung 66 für den Druckluftanschluss in Kontakt gelangen mit den Steckkontakten 63, 64 des Steckers 62.

Dadurch, dass der Versorgungsanschluss 55 nicht mit der Haltekraft des Tastkopfes 7 an dem Stecker 62 angeordnet ist, werden Beschädigungen von Pins 71 oder den Aufnahmen 57, 74 in den Steckkontakten 63, 64 vermieden, da die Kraft, die auf den Kolben 58 wirkt, deutlich kleiner ist als die Haltekraft für den Tastkopf 7.

### Bezugszahlen

- 1: Koordinatenmessgerät
- 2: Werkzeugtisch
- 3: Portal
- 4: Traverse
- 5: Schlitten
- 6: Pinole
- 7: Sensor (Tastkopf)
- 8: Taststift
- 9: Werkstück
- 10: Maßstab
- 11: Maßstab
- 12: Maßstab
- 13: Portalfuß
- 14: Portalfuß
- 15: Computer
- 16: Haken
- 17: Dreipunktlager
- 18: Taststifthalterung
- 19: Tastelement
- 20: Dreipunktlagerung
- 21: erste Vorrichtung
- 22: Druckfeder
- 23: zweite Vorrichtung
- 24: Kolben
- 25: mit Druckluft beaufschlagbarer Raum
- 26: Zentrierstift
- 27: Zentrierstift
- 28: Schrauben
- 29: Druckluftanschluss
- 30: Zentrierstift
- 31: Dichtung
- 32: Dichtung
- 33: Dichtung
- 34: Deckel
- 35: Ebene der Dreipunkthalterung
- 36: Gegenlager
- 37: Lager
- 38: Zylinder
- 39: Aufnahme
- 40: Sensor
- 42: Messsystemwechselschnittstelle
- 46: Haltevorrichtung
- 49: Schutzvorrichtung
- 51: Innenfläche Messsystemwechselschnittstelle
- 52: Dreh-/Schwenkgelenk
- 53: Adapter Dreh-/Schwenkgelenk
- 54: Stift
- 55: Versorgungsanschluss
- 56: Kupplung
- 57: Aufnahme
- 58: Kolben
- 59: Schulter
- 60: Nut
- 61: Feder
- 62: Stecker
- 63: Steckkontakt
- 64: Steckkontakt
- 65: Druckluftanschluss
- 66: Bohrung
- 67: Druckluftanschluss
- 68: O-Ring
- 69: Raum
- 70: Bohrung
- 71: Pins
- 72: O-Ring
- 73: Kugel
- 74: Aufnahme
- A: Pfeil
- B: Pfeil
- C: Pfeil

## Patentansprüche

1. Koordinatenmessgerät (1) mit einem an einer Pinole (6) oder an einer Messsystemwechselschnittstelle (42) angeordneten Sensor (7) oder einem Adapter (53) für einen Sensor (7) und mit einer Lagervorrichtung, welche wenigstens ein an der Pinole (6) oder an der Messsystemwechselschnittstelle (42) angeordnetes Lager (37) und wenigstens ein an dem Sensor (7) oder dem Adapter (53) angeordnetes Gegenlager (36) aufweist, und mit einer an der Pinole (6) oder an der Messsystemwechselschnittstelle (42) angeordneten Haltevorrichtung (16) für den Sensor (7) oder den Adapter (53) und mit wenigstens einem Versorgungsanschluss (55) , der zwischen der Pinole (6) oder der Messsystemwechselschnittstelle (42) und dem Sensor (7) oder dem Adapter (53) angeordnet ist, wobei der wenigstens eine Versorgungsanschluss (55) einen Stecker (62) und eine Kupplung (56, 57) aufweist, **dadurch gekennzeichnet, dass** der Stecker (62) und/oder die Kupplung (56, 57) verfahrbar an der Pinole (6) oder an der Messsystemwechselschnittstelle (42) und/oder an dem Sensor (7) oder dem Adapter (53) angeordnet ist.

2. Koordinatenmessgerät nach Anspruch 1, **dadurch gekennzeichnet, dass** der Stecker (62) oder die Kupplung (56), (57) an der Pinole (6) oder an der Messsystemwechselschnittstelle (42) angeordnet ist, und dass der Stecker (62) oder die Kupplung (56, 57) pneumatisch, elektrisch und/oder hydraulisch verfahrbar ausgebildet ist.

3. Koordinatenmessgerät nach Anspruch 1 oder 2, **dadurch gekennzeichnet, dass** der Stecker (62) oder die Kupplung (56, 57) an einem Kolben (58) angeordnet ist, und dass der Kolben (58) in einem Zylinder beweglich gelagert ist, und dass der Zylinder mit Druckluft beaufschlagbar ausgebildet ist.

4. Koordinatenmessgerät nach Anspruch 3, **dadurch gekennzeichnet, dass** eine Haltevorrichtung (16) für den Sensor (7) oder für den Adapter (53) vorgesehen ist, und dass die Haltevorrichtung (16) einen Druckluftanschluss für die Erzeugung einer Haltekraft des Sensors (7) oder des Adapters (53) aufweist, und dass ein Druckluftanschluss (67) für den wenigstens einen Versorgungsanschluss (55) vorgesehen ist, und dass beide Druckluftanschlüsse gekoppelt ausgebildet sind.

5. Koordinatenmessgerät nach Anspruch 1, **dadurch gekennzeichnet, dass** der Stecker (62) oder die Kupplung (56, 57) in dem Sensor (7) oder in dem Adapter (53) angeordnet ist, und dass zum Verfahren des Steckers (62) oder der Kupplung (56, 57) wenigstens ein Motor in dem Sensor (7) oder dem Adapter (53) vorgesehen ist.

6. Koordinatenmessgerät nach einem der vorhergehenden Ansprüche, **dadurch gekennzeichnet, dass** in oder an der Messsystemwechselschnittstelle (42) wenigstens zwei krafterzeugende Vorrichtungen (21, 23) angeordnet sind, die als wenigstens zwei auf die Haltevorrichtung (16) wirkende kräfteerzeugende Vorrichtungen (21, 23) ausgebildet sind, und dass eine erste krafterzeugende Vorrichtung (21) als Feder (22) ausgebildet ist und dass eine zweite krafterzeugende Vorrichtung (23) als pneumatisch betriebener Kolben (24) ausgebildet ist.

7. Koordinatenmessgerät nach Anspruch 6, **dadurch gekennzeichnet, dass** die als Feder (22) ausgebildete erste krafterzeugende Vorrichtung (21) als eine zumindest während einer Positionierung des Sensors (7) oder des Adapters (53) eine krafterzeugende Vorrichtung (21) ausgebildet ist, und dass die zweite krafterzeugende Vorrichtung (23) als eine nach der Positionierung des Sensors (7) oder des Adapters (53) eine Haltekraft erzeugende Vorrichtung (23) ausgebildet ist.

8. Koordinatenmessgerät nach einem der vorhergehenden Ansprüche, **dadurch gekennzeichnet, dass** wenigstens eine Vorrichtung zum Erzeugen von Schwingungen zum Anregen des Sensors (7) vorgesehen ist.

9. Verfahren zur Anordnung eines Sensors (7) oder eines Adapters (53) an einer Pinole (6) oder an einer reproduzierbaren Messsystemwechselschnittstelle (42) eines Koordinatenmessgerätes (1), bei dem der Sensor (7) oder der Adapter (53) mit Gegenlagern (36) an Lagern (37) der Pinole (6) oder der Messsystemwechselschnittstelle (42) angeordnet wird und wenigstens eine Haltekraft für den Sensor (7) oder den Adapter (53) erzeugt wird, und bei dem ein Kontakt zwischen einem Stecker (62) und einer Kupplung (56, 57) wenigstens eines Versorgungsanschlusses hergestellt wird, **dadurch gekennzeichnet, dass** nach der Anordnung der Gegenlager (36) des Sensors (7) oder des Adapters (53) in den Lagern (37) der Pinole (6) oder der Messsystemwechselschnittstelle (42) der Stecker (62) und/oder die Kupplung (56, 57) des wenigstens einen Versorgungsanschlusses (55) verfahren wird.

10. Verfahren nach Anspruch 9, **dadurch gekennzeichnet, dass** nach der Anordnung der Gegenlager (36) des Sensors (7) oder des Adapters (53) in den Lagern (37) der Pinole (6) oder der Messsystemwechselschnittstelle (42) wenigstens eine Haltekraft für den Sensor (7) oder den Adapter (53) erzeugt wird, und dass gleichzeitig oder nach dem Erzeugen der wenigstens einen Haltekraft der Stecker (62) oder die Kupplung (56, 57) verfahren wird, und dass ein Kontakt zwischen der Kupplung (56, 57) und dem Stecker (62) hergestellt wird.

11. Verfahren nach Anspruch 9, **dadurch gekennzeichnet, dass** ein den Stecker (62) oder die Kupplung (56, 57) tragender Kolben (58) in einer Ruheposition angeordnet wird, dass der Sensor (7) oder der Adapter (53) mit den Gegenlagern (36) in Lagern (37) der Pinole (6) oder der Messsystemwechselschnittstelle (42) angeordnet wird, dass eine erste Kraft auf eine Haltevorrichtung (16) für den Sensor (7) oder den Adapter (53) aufgebracht wird, um zwischen den Lagern (37) und den Gegenlagern (36) einen Kontakt herzustellen, dass anschließend eine zweite Haltekraft für den Sensor (7) oder Adapter (53) erzeugt wird, und dass gleichzeitig mit dem Erzeugen der zweiten Haltekraft für den Sensor (7) oder Adapter (53) oder nach dem Erzeugen der zweiten Haltekraft der Stecker (62) oder die Kupplung (56, 57) verfahren wird, und dass ein Kontakt zwischen dem Stecker (62) und der Kupplung (56, 57) hergestellt wird.

12. Verfahren nach Anspruch 11, **dadurch gekennzeichnet, dass** die erste Kraft mittels wenigstens einer Feder (22) erzeugt wird, und dass die zweite Haltekraft pneumatisch erzeugt wird, und dass das Verfahren des Steckers (62) oder der Kupplung (56, 57) pneumatisch durchgeführt wird.

13. Verfahren nach einem der Ansprüche 9 bis 12, **dadurch gekennzeichnet, dass** wenigstens zwei Versorgungsanschlüsse (55) vorgesehen sind, und dass Stecker (62) und Kupplungen (56, 57) der Versorgungsanschlüsse (55) gleichzeitig oder nacheinander in Kontakt gebracht werden.

14. Verfahren nach einem der Ansprüche 9 bis 13, **dadurch gekennzeichnet, dass** der Stecker (62) oder die Kupplung (56, 57) bis zu einem Endpunkt am Sensor (7) oder am Adapter (53) oder bis zu einem Anschlag an der Pinole (6) oder der Messsystemwechselschnittstelle (42) verfahren wird.

15. Verfahren nach Anspruch 11, **dadurch gekennzeichnet, dass** durch Erzeugen der ersten Kraft eine Vorpositionierung des Sensors (7) oder des Adapters (53) in einer Endlage durchgeführt wird.

16. Verfahren nach einem der Ansprüche 11 bis 15, **dadurch gekennzeichnet, dass** die zweite Haltekraft zusätzlich zu der ersten Kraft auf die Haltevorrichtung (16) wirkt.

17. Verfahren nach einem der Ansprüche 11 bis 16, **dadurch gekennzeichnet, dass** die erste Kraft kleiner als die zweite Haltekraft ist.

18. Verfahren nach einem der Ansprüche 11 bis 17, **dadurch gekennzeichnet, dass** während oder nach Erzeugung der ersten Kraft der Sensor (7) oder der Adapter (53) durch eine dritte Kraft wenigstens einmal bewegt wird.

## Claims

1. Coordinate measuring device (1) comprising a sensor (7) arranged on a quill (6) or on a measurement system changeover interface (42), or comprising an adapter (53) for a sensor (7), and comprising a bearing apparatus which has at least one bearing (37), arranged either on the quill (6) or on the measurement system changeover interface (42), and at least one counter-bearing (36) arranged either on the sensor (7) or on the adapter (53), and comprising a holding apparatus (16) for the sensor (7) or the adapter (53), said holding apparatus being arranged either on the quill (6) or on the measurement system changeover interface (42), and comprising at least one supply connection (55) arranged between the quill (6) or the measurement system changeover interface (42) and the sensor (7) or the adapter (53), the at least one supply connection (55) having a plug (62) and a coupling (56, 57), **characterised in that** the plug (62) and/or the coupling (56, 57) is/are movably arranged on the quill (6) or the measurement system changeover interface (42) and/or on the sensor (7) or the adapter (53).

2. Coordinate measuring device according to claim 1, **characterised in that** the plug (62) or the coupling (56), (57) is arranged on either the quill (6) or the measurement system changeover interface (42), and **in that** the plug (62) or the coupling (56, 57) is formed to be pneumatically, electrically and/or hydraulically movable.

3. Coordinate measuring device according to claim 1 or claim 2, **characterised in that** the plug (62) or the coupling (56, 57) is arranged on a piston (58), and **in that** the piston (58) is movably mounted in a cylinder, and **in that** the cylinder is formed such that compressed air can be applied thereto.

4. Coordinate measuring device according to claim 3, **characterised in that** a holding apparatus (16) is provided for the sensor (7) or for the adapter (53), and **in that** the holding apparatus (16) has a compressed-air connection for generating a holding force for the sensor (7) or the adapter (53), and **in that** a compressed-air connection (67) is provided for the at least one supply connection (55), and **in that** both compressed-air connections are formed in a coupled manner.

5. Coordinate measuring device according to claim 1, **characterised in that** the plug (62) or the coupling (56, 57) is arranged in the sensor (7) or in the adapter (53), and **in that** at least one motor is provided in the sensor (7) or the adapter (53) for moving the plug (62) or the coupling (56, 57).

6. Coordinate measuring device according to any of the preceding claims, **characterised in that** at least two force-generating apparatuses (21, 23) are arranged in or on the measurement system changeover interface (42) and are formed as at least two force-generating apparatuses (21, 23) that act on the holding apparatus (16), and **in that** a first force-generating apparatus (21) is formed as a spring (22) and **in that** a second force-generating apparatus (23) is formed as a pneumatically operated piston (24).

7. Coordinate measuring device according to claim 6, **characterised in that** the first force-generating apparatus (21), which is in the form of a spring (22), is formed as an apparatus (21) that generates a force at least while the sensor (7) or the adapter (53) is being positioned, and **in that** the second force-generating apparatus (23) is formed as an apparatus (23) that generates a holding force after the sensor (7) or the adapter (53) has been positioned.

8. Coordinate measuring device according to any of the preceding claims, **characterised in that** at least one apparatus for generating vibrations to excite the sensor (7) is provided.

9. Method for arranging a sensor (7) or an adapter (53) on either a quill (6) or a reproducible measurement system changeover interface (42) of a coordinate measuring device (1), in which the sensor (7) or the adapter (53) is arranged by counter-bearings (36) on bearings (37) of the quill (6) or of the measurement system changeover interface (42), and at least one holding force is generated for the sensor (7) or the adapter (53), and in which contact is established between a plug (62) and a coupling (56, 57) of at least one supply connection, **characterised in that**, after the counter-bearings (36) of the sensor (7) or of the adapter (53) have been arranged in the bearings (37) of either the quill (6) or the measurement system changeover interface (42), the plug (62) and/or the coupling (56, 57) of the at least one supply connection (55) is/are moved.

10. Method according to claim 9, **characterised in that**, after the counter-bearings (36) of the sensor (7) or of the adapter (53) have been arranged in the bearings (37) of the quill (6) or of the measurement system changeover interface (42), at least one holding force is generated for the sensor (7) or the adapter (53), and **in that** the plug (62) or the coupling (56, 57) is moved at the same time as or after the generation of the at least one holding force, and **in that** contact is established between the coupling (56, 57) and the plug (62).

11. Method according to claim 9, **characterised in that** a piston (58) bearing the plug (62) or the coupling (56, 57) is arranged in a standby position, **in that** the sensor (7) or the adapter (53) is arranged by the counter-bearings (36) in bearings (37) of the quill (6) or of the measurement system changeover interface (42), **in that** a first force is applied to a holding apparatus (16) for the sensor (7) or the adapter (53) in order to establish contact between the bearings (37) and the counter-bearings (36), **in that** a second holding force is then generated for the sensor (7) or the adapter (53), and **in that** the plug (62) or the coupling (56, 57) is moved at the same time as the generation of the second holding force for the sensor (7) or the adapter (53) or after the generation of the second holding force, and **in that** contact is established between the plug (62) and the coupling (56, 57).

12. Method according to claim 11, **characterised in that** the first force is generated by means of at least one spring (22), and **in that** the second holding force is generated pneumatically, and **in that** the plug (62) or the coupling (56, 57) is moved pneumatically.

13. Method according to any of claims 9 to 12, **characterised in that** at least two supply connections (55) are provided, and **in that** the plug (62) and the couplings (56, 57) of the supply connections (55) are brought into contact simultaneously or one after the other.

14. Method according to any of claims 9 to 13, **characterised in that** the plug (62) or the coupling (56, 57) is moved as far as an end point on the sensor (7) or the adapter (53) or as far as a stop on the quill (6) or the measurement system changeover interface (42).

15. Method according to claim 11, **characterised in that** the sensor (7) or the adapter (53) is pre-positioned in an end position by the generation of the first force.

16. Method according to any of claims 11 to 15, **characterised in that** the second holding force acts on the holding apparatus (16) in addition to the first force.

17. Method according to any of claims 11 to 16, **characterised in that** the first force is smaller than the second force.

18. Method according to any of claims 11 to 17, **characterised in that** the sensor (7) or the adapter (53) is moved at least once by a third force either during or after the generation of the first force.

## Revendications

1. Appareil de mesure de coordonnées (1) comprenant un capteur (7), ou un adaptateur (53) destiné à un capteur (7), agencé au niveau d'une broche (6) ou d'une interface de changement de système de mesure (42), et comprenant un dispositif de palier qui présente au moins un palier (37) agencé au niveau de la broche (6) ou de l'interface de changement de système de mesure (42) et au moins un contre-palier (36) agencé au niveau du capteur (7) ou de l'adaptateur (53), et comprenant un dispositif de retenue (16) destiné au capteur (7) ou à l'adaptateur (53) et agencé au niveau de la broche (6) ou de l'interface de changement de système de mesure (42) , et comprenant au moins un raccord d'alimentation (55) qui est agencé entre la broche (6), ou l'interface de changement de système de mesure (42), et le capteur (7), ou l'adaptateur (53), dans lequel le au moins un raccord d'alimentation (55) présente un connecteur (62) et un accouplement (56, 57), **caractérisé en ce que** le connecteur (62) et/ou l'accouplement (56, 57) est/sont agencé(s) au niveau de la broche (6) ou de l'interface de changement de système de mesure (42) et/ou au niveau du capteur (7) ou de l'adaptateur (53) de manière à pouvoir être déplacé(s).

2. Appareil de mesure de coordonnées selon la revendication 1, **caractérisé en ce que** le connecteur (62) ou le couplage (56, 57) est agencé au niveau de la broche (6) ou au niveau de l'interface de changement de système de mesure (42), et **en ce que** le connecteur (62) ou le couplage (56, 57) est agencé de manière à pouvoir être déplacé pneumatiquement, électriquement et/ou hydrauliquement.

3. Appareil de mesure de coordonnées selon la revendication 1 ou 2, **caractérisé en ce que** le connecteur (62) ou l'accouplement (56, 57) est agencé au niveau d'un piston (58), et **en ce que** le piston (58) est monté mobile dans un vérin, et **en ce que** le vérin est réalisé de manière à pouvoir être alimenté en air comprimé.

4. Appareil de mesure de coordonnées selon la revendication 3, **caractérisé en ce qu'**un dispositif de retenue (16) destiné au capteur (7) ou à l'adaptateur (53) est fourni, et **en ce que** le dispositif de retenue (16) présente un raccord d'air comprimé en vue de la génération d'une force de retenue du capteur (7) ou de l'adaptateur (53), et **en ce qu'**un raccord d'air comprimé (67) destiné au au moins un raccord d'alimentation (55) est fourni, et **en ce que** les deux raccords d'air comprimé sont réalisés de manière couplée.

5. Appareil de mesure de coordonnées selon la revendication 1, **caractérisé en ce que** le connecteur (62) ou le couplage (56, 57) est agencé dans le capteur (7) ou dans l'adaptateur (53), et **en ce qu'**au moins un moteur est fourni dans le capteur (7) ou dans l'adaptateur (53) afin de déplacer le connecteur (62) ou le couplage (56, 57).

6. Appareil de mesure de coordonnées selon l'une quelconque des revendications précédentes, **caractérisé en ce qu'**au moins deux dispositifs de génération de force (21, 23) sont agencés dans ou au niveau de l'interface de changement de système de mesure (42), lesquels dispositifs de génération de force sont réalisés sous la forme d'au moins deux dispositifs de génération de force (21, 23) agissant sur le dispositif de retenue (16), et **en ce qu'**un premier dispositif de génération de force (21) est réalisé sous la forme d'un ressort (22) et **en ce qu'**un second dispositif de génération de force (23) est réalisé sous la forme d'un piston (24) à commande pneumatique.

7. Appareil de mesure de coordonnées selon la revendication 6, **caractérisé en ce que** le premier dispositif de génération de force (21) réalisé sous la forme d'un ressort (22) est réalisé sous la forme d'un dispositif de génération de force (21) au moins pendant un positionnement du capteur (7) ou de l'adaptateur (53), et **en ce que** le second dispositif de génération de force (23) est réalisé sous la forme d'un dispositif de génération de force de retenue (23) après le positionnement du capteur (7) ou de l'adaptateur (53).

8. Appareil de mesure de coordonnées selon l'une quelconque des revendications précédentes, **caractérisé en ce qu'**au moins un dispositif permettant de générer des vibrations afin d'exciter le capteur (7) est fourni.

9. Procédé d'agencement d'un capteur (7) ou d'un adaptateur (53) au niveau d'une broche (6) ou d'une interface de changement de système de mesure (42) reproductible d'un appareil de mesure de coordonnées (1), dans lequel le capteur (7) ou l'adaptateur (53) est agencé avec des contre-paliers (36) au niveau des paliers (37) de la broche (6) ou de l'interface de changement de système de mesure (42) et au moins une force de retenue destinée au capteur (7) ou à l'adaptateur (53) est générée, et dans lequel un contact est établi entre un connecteur (62) et un accouplement (56, 57) d'au moins un raccord d'alimentation, **caractérisé en ce que** le connecteur (62) et/ou l'accouplement (56, 57) du au moins un raccord d'alimentation (55) est/sont déplacé(s) après l'agencement des contre-paliers (36) du capteur (7) ou de l'adaptateur (53) dans les paliers (37) de la broche (6) ou de l'interface de changement de système de mesure (42).

10. Procédé selon la revendication 9, **caractérisé en ce qu'**au moins une force de retenue destinée au capteur (7) ou à l'adaptateur (53) est générée après l'agencement des contre-paliers (36) du capteur (7) ou de l'adaptateur (53) dans les paliers (37) de la broche (6) ou de l'interface de changement de système de mesure (42), et **en ce que** le connecteur (62) ou l'accouplement (56, 57) est déplacé simultanément ou après la génération de la au moins une force de retenue, et **en ce qu'**un contact est établi entre l'accouplement (56, 57) et le connecteur (62).

11. Procédé selon la revendication 9, **caractérisé en ce qu'**un piston (58) portant le connecteur (62) ou l'accouplement (56, 57) est agencé dans une position de repos, **en ce que** le capteur (7) ou l'adaptateur (53) est agencé avec les contre-paliers (36) dans des paliers (37) de la broche (6) ou de l'interface de changement de système de mesure (42), **en ce qu'**une première force est appliquée à un dispositif de retenue (16) destiné au capteur (7) ou à l'adaptateur (53) afin d'établir un contact entre les paliers (37) et les contre-paliers (36), **en ce qu'**une deuxième force de retenue destinée au capteur (7) ou à l'adaptateur (53) est ensuite générée, et **en ce que** le connecteur (62) ou l'accouplement (56, 57) est déplacé en même temps qu'est générée la deuxième force de retenue destinée au capteur (7) ou à l'adaptateur (53) ou après la génération de ladite deuxième force de retenue, et **en ce qu'**un contact est établi entre le connecteur (62) et l'accouplement (56, 57).

12. Procédé selon la revendication 11, **caractérisé en ce que** la première force est générée au moyen d'au moins un ressort (22), et **en ce que** la deuxième force de retenue est générée pneumatiquement, et **en ce que** le déplacement du connecteur (62) ou de l'accouplement (56, 57) est mise en œuvre pneumatiquement.

13. Procédé selon l'une quelconque des revendications 9 à 12, **caractérisé en ce qu'**au moins deux raccords d'alimentation (55) sont fournis, et **en ce que** des connecteurs (62) et des accouplements (56, 57) des raccords d'alimentation (55) sont mis en contact simultanément ou successivement.

14. Procédé selon l'une quelconque des revendications 9 à 13, **caractérisé en ce que** le connecteur (62) ou le couplage (56, 57) est déplacé jusqu'à un point final au niveau du capteur (7) ou de l'adaptateur (53) ou jusqu'à une butée au niveau de la broche (6) ou de l'interface de changement de système de mesure (42).

15. Procédé selon la revendication 11, **caractérisé en ce qu'**un prépositionnement du capteur (7) ou de l'adaptateur (53) dans une position finale est mis en œuvre grâce à la génération de la première force.

16. Procédé selon l'une quelconque des revendications 11 à 15, **caractérisé en ce que** la deuxième force de retenue agit sur le dispositif de retenue (16) en plus de la première force.

17. Procédé selon l'une quelconque des revendications 11 à 16, **caractérisé en ce que** la première force est inférieure à la deuxième force de retenue.

18. Procédé selon l'une quelconque des revendications 11 à 17, **caractérisé en ce que** le capteur (7) ou l'adaptateur (53) est déplacé au moins une fois grâce à une troisième force pendant ou après la génération de la première force.
